(19) Europäisches Patentamt

European Patent Office

Office européen des brevets

(11) **EP 1 774 257 B1**

(12) **EUROPEAN PATENT SPECIFICATION**

(45) Date of publication and mention of the grant of the patent:
**13.07.2011 Bulletin 2011/28**

(51) Int Cl.:
***G01C 15/00*** (2006.01)

(21) Application number: **05772516.0**

(86) International application number:
**PCT/US2005/017542**

(22) Date of filing: **19.05.2005**

(87) International publication number:
**WO 2006/016935 (16.02.2006 Gazette 2006/07)**

(54) **COMBINATION LASER SYSTEM AND GLOBAL NAVIGATION SATELLITE SYSTEM**

KOMBINATIONS-LASERSYSTEM UND GLOBALES NAVIGATIONSSATELLITENSYSTEM

COMBINAISON DE SYSTÈME LASER ET DE SYSTÈME DE NAVIGATION GLOBALE PAR SATELLITE

(84) Designated Contracting States:
**DE FR**

(30) Priority: **13.07.2004 US 890037**

(43) Date of publication of application:
**18.04.2007 Bulletin 2007/16**

(73) Proprietor: **Trimble Navigation Limited**
**Sunnyvale, CA 94085 (US)**

(72) Inventors:
• **TALBOT, Nicholas, C.**
  **Ashburton, VIC 3147 (AU)**
• **NICHOLS, Mark, E.**
  **Christchurch (NZ)**
• **CAIN, Gary, L.**
  **Springfield, OH 45502 (US)**
• **JANKY, James, M.**
  **Los Altos, CA 94024 (US)**

(74) Representative: **Hawkins, Richard Dudley et al**
**Keltie LLP**
**Fleet Place House**
**2 Fleet Place**
**London EC4M 7ET (GB)**

(56) References cited:
**US-A- 5 652 592     US-A1- 2003 137 658**

**Description**

The current invention relates to position tracking and machine control systems, and in particular to a combination of laser systems and global navigation satellite systems to track position and to provide accurate machine control.

Global navigation satellite systems, like GPS, and GLONASS have been used extensively to determine position coordinates, facilitating surveying and automated control of mobile units. In the future, the European GALILEO system will have similar capabilities. An autonomous navigational system that includes a satellite receiver and a navigational computer can achieve a 10-meter level of accuracy in determining the position of a mobile unit using solely the satellite signals. Differential navigational systems that utilize differential corrections in addition to the satellite signals can determine the positional information to within a meter range of accuracy. Real-time kinematic (RTK) navigational systems that are capable of utilizing both code and carrier information transmitted from such satellites can achieve centimeter level accuracy.

However, a level of accuracy less than a centimeter has been beyond the reach of typical satellite-based navigational systems. In an attempt to achieve very high accuracy, prior art systems have included rotating laser transmitters that project a plane of light to millimeter level accuracy. However, these prior art laser-based systems cannot be used for the purposes of three dimensional navigation of mobile objects because they are configured to determine only the vertical coordinate with great accuracy.

It is against the above mentioned background, that the present invention provides a number of unobvious advantages and advances over the prior art. In particular, the present invention discloses a combination laser system and global navigation satellite system that allows a user to realize high precision control of mobile units, including high precision machine control.

With the combination laser detector and global navigation satellite antenna, the laser height reference detected by the laser detector is provided in a known and fixed relationship with the nominal phase center of the global navigation satellite antenna. Each mobile unit equipped with a combination laser detector and global navigation satellite antenna uses the data from both the laser system and the GPS system to improve its position determination capabilities. The signals received from said laser detector are used to facilitate the determination of the position of the mobile unit based on the signals from the global navigation satellite antenna.

The aforementioned advantages of the present invention, as well as additional advantages thereof, will be more clearly understood hereinafter as a result of a detailed description of a preferred embodiment of the invention when taken in conjunction with the following drawings, wherein like elements are indicated by like symbols.

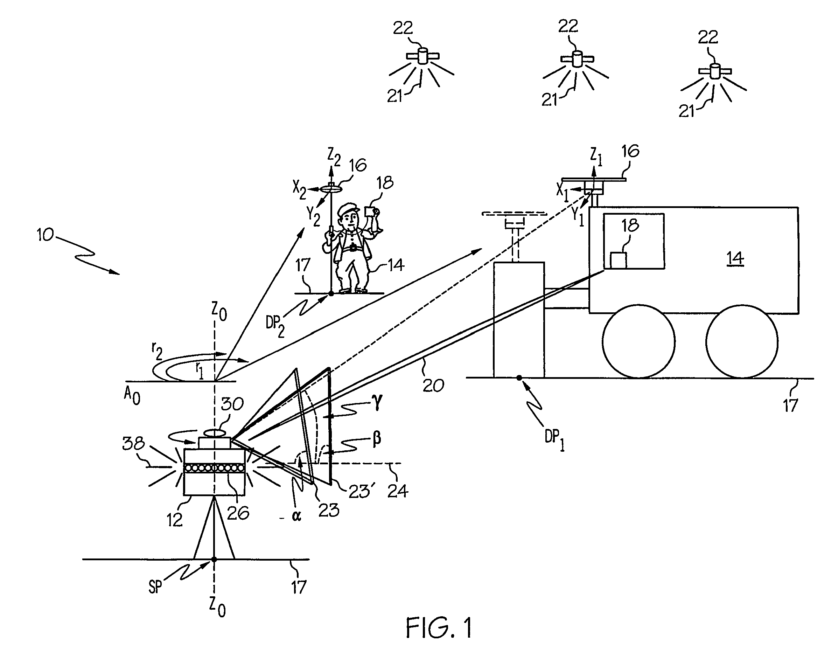

FIG. 1 shows a position tracking and control (PTC) system according to one embodiment of the present invention wherein the PTC system comprises a laser system, one or more mobile units, each having a combination laser detector and global navigation satellite (CLDGNS) antenna and an associated control system, and a communication link.

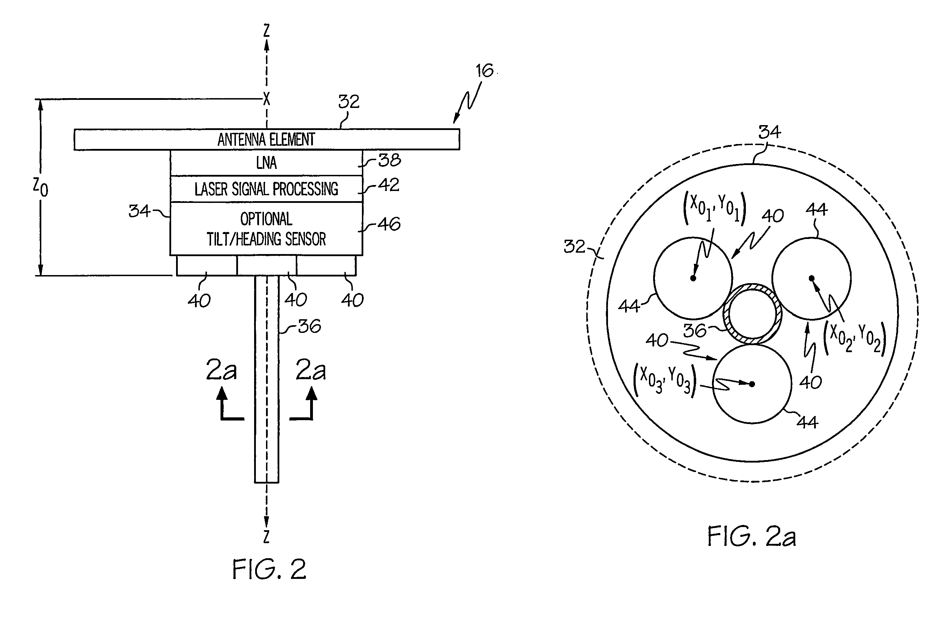

FIGS. 2-4 depict various embodiments of combination laser detector and global navigation satellite antennas according to the present invention.

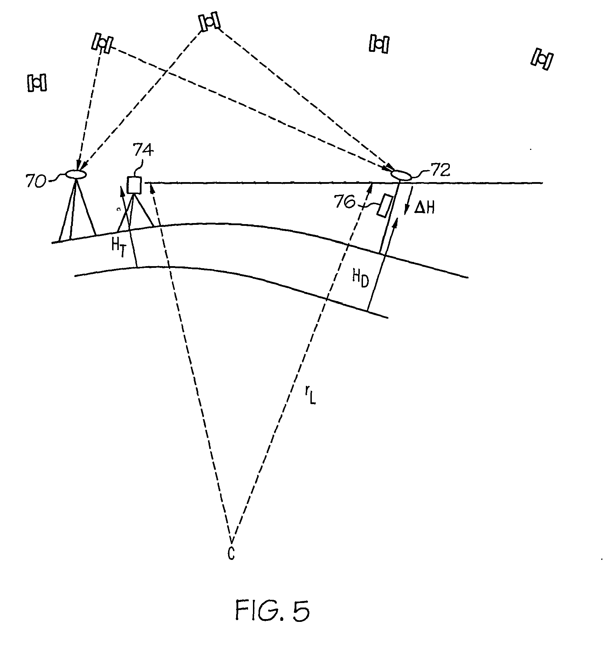

FIGS. 5-7 are schematic diagrams useful in explaining the manner in which data from the laser system and data from the global navigation satellite system are combined. An example of a known control system comprising a rotary laser apparatus, an optical sensor, a GPS antenna and an arithmetic operation device, for controlling construction machines is described in US 2003/137658 A1.

The present invention can be best understood by focusing on FIG. 1 which depicts a position tracking and control (PTC) system **10**. The PTC system **10** comprises a laser transmitter system **12,** one or more mobile or rover units **14,** each having a combination laser detector and global navigation satellite (CLDGNS) antenna **16** and an associated control system **18,** and having a transmitter for establishing a communication link **20,** preferably a radio link. Signals **21** from a plurality of global navigation satellites **22** orbiting the earth, such as GPS, GLONASS, GALILEO, and combinations thereof, are received by the CLDGNS antenna **16** so that the coordinates of dynamic points in a plot of land **17,** such as points indicated as $DP_1$ and $DP_2$, can be determined to a centimeter level of accuracy by the control system **18**. Control system **18** includes a microprocessor or other computing hardware configured to process data from the antenna 16 to provide an estimate of the position of the antenna **16**.

Millimeter level of accuracy in determining the position of the dynamic points $DP_1$ and $DP_2$ relative to each CLDGNS antenna **16** is provided by the control system **18** which uses information provided by the laser system **12** in its coordinate (x, y, z) position computation in addition to signals received from satellites **22**. In one embodiment, the laser system **12** provides at least two diverging or fan-shaped beams **23** and **23'** that rotate continuously about a vertical axis $Z_0$ at a uniform rate above a known stationary point **SP** in the plot of land **17**. The fan-shaped beams **23** and **23'** project from the laser system **12** in non-vertical planes, such that the first fan beam **23** will intersect an arbitrary horizontal reference plane **24** at an angle α, and the second fan shaped beam **23'** will intersect the horizontal reference plane at

an angle $\beta$. Dynamic point $DP_1$, may be a working element on a machine, such as a grader blade, while dynamic point $DP_2$ may be a point at the bottom of a manually positioned mast being moved about by a surveyor.

It is to be appreciated that the fan-shaped beams **23** and **23'**, if rotated at a constant speed about a vertical axis, will activate one after another (with some delay of time therebetween) at least one optical sensor **44** (FIGS. 2-4) of each CLDGNS antenna **16**. Further, it is to be appreciated that in the embodiment of FIG. 1, the time delay between activating the optical sensor **44** by each fan-shaped beam **23** and **23'** will increase or decrease as the relative position of a CLDGNS antenna 16 moves above or below the horizontal reference plane **24,** respectively. It is to be appreciated that the CLDGNS antenna **16** can be initialized to any arbitrary horizontal reference plane **24** simply by selecting and entering into the control system **18** a detection time delay. Additionally, it is to be appreciated that any detected change by the CLDGNS antenna **16** in the detection time delay is related to an angle $\gamma$, which is the angle at which a straight line passing through the optical sensor **44** (FIGS. 2-4) of the CLDGNS antenna **16** and the point of emanation of the fan-shaped beams **23** and **23'** meets the selected arbitrary horizontal reference plane **24.**

As mentioned above, angles a and $\beta$ are constants. Angle $\gamma$ is determined by sensing the timing between the illumination of the sensor **44** by the beams **23** and **23'**. The higher the sensor **44,** the greater the delay. It will be apparent that fluctuation in the rotation speed of the fan-shaped beams **23** and **23'** will introduce short term, transient errors. To minimize such errors, the control processor **18** may be provided with the rotation speed of the laser system **12** via the communication link **20.** The rotation speed may, however, be phase locked to a crystal oscillator, providing sufficient accuracy. Accordingly, knowing the rotation speed, the control system **18** can compute the value of angle $\gamma$ arithmetically from the detected time delay between illumination by the beams **23** and **23',** and thus the elevation angle of the optical sensor in the CLDGNS antenna **16** above the reference horizontal plane **24** is determined.

In another embodiment, the laser system **12** is further provided with a plurality of light sources which are strobed at the same point in time during each rotation of the beams **23** and **23'**. Beacon **26** provides a simultaneous 360° flash **38** at a different wavelength than the fan shaped beams **23** and **23'**. By orientating the laser system **12** such that the beacon **26** flashes as the mid point between the fan-shaped beams **23** and **23'** passes a known true heading $A_0$, the control system **18** can also compute a relative bearing to the laser system **12** from the time delay between detecting the signal **38** of the beacon and detecting the fan-shaped beams **23** and **23'.**

In still another embodiment, the laser system **12** is provided with a global navigation satellite system (GNSS) receiver 30. The GNSS receiver **30** can receive and compute its position from the signals 21 provided by the global navigation satellites **22.** A detailed discussion of how to determine a location from such signals is disclosed by U.S. Patent No. 6,433,866, also assigned to Trimble Navigation, LTD.

The control system 18 in addition to knowing its own position (as computed from the detected satellite signals received and provided by the CLDGNS antenna **16),** is provided also with the known and fixed position of the laser system **12** via the communication link **20.** Using the information provided by the laser system **12** for correlation and error correcting, the control system **18** can then compute the coordinate (x, y, z) position of any dynamic point relative to the CLDGNS antenna **16** to a high degree of accuracy. A more detail discussion of the computations performed by the control system **18** is disclosed below.

It is to be appreciated that the PTC system **10** provides a number of benefits to a potential mobile user by integrating a laser detector and a global navigation satellite antenna. For example, the CLDGNS antenna **16** costs less than separate laser detectors and global navigation satellite antennas because the integrated CLDGNS antenna requires only one set of packaging, and can utilize shared circuitry and wiring, computer memory and processing, and a common power supply. Other benefits are disclosed with reference made to FIGS. 2-4 which illustrate various embodiments of the combination laser detector and global navigation satellite antenna according to the present invention.

FIG. 2 illustrates diagrammatically one embodiment of a CLDGNS antenna **16** which provides an antenna element **32** mounted to an electronic housing **34,** which in turn is mounted to an end of an elongated support **36,** such as a mast. Within the housing **34,** the antenna element **32** is coupled to a low noise amplifier (LNA) **38,** and a laser detector **40** is coupled to a laser signal processor **42.** The laser detector **40** may include a number of optical sensors **44** placed around the periphery of the housing **34.** The optical sensors **44** face generally downward and outward. In this orientation, at least one of the optical sensors **44** will detect the fan-shaped beams **23** and **23'** from the laser system **12,** and two or more optical sensors **44** will detect the fan-shaped beam some of the time. Each optical sensor **44** can be read independently and its position calculated by the control system **18.**

In the illustrated embodiment of FIG. 2, three optical sensors **44** are provided, and in other embodiments more may be included to improve laser detection, if desired. In such embodiments, with the relative positions $X_0$, $Y_0$, and $Z_0$ of each optical sensor **44** to the nominal phase center x of its respective antenna element 32 being known, transposing the detected laser position of each optical sensor **44** to the nominal phase center x of the antenna element **32** is easily computed arithmetically by the control system **18.**

The difference in the detected elevation between at the three optical sensors **44** provides an indication of tilt, which in turn may be used by the control system **18** to compensate for errors that would otherwise result in the calculated position of $DP_1$ and $DP_2$. Additionally, although the antenna tilt angle is important for adjusting the detected laser heights of each optical sensor **44** to the nominal phase center x of the associated antenna element **32,** these changes in detected laser heights can also be used to help determine the orientation of the device (such as a grader/bulldozer blade) to which the CLDGNS antenna **16** may be connected. However, if desired, a tilt/heading sensor **46** may be further included in the packaging of the CLDGNS antenna **16** to simplify further the compensation for tilt, error correcting, and device orientation determination.

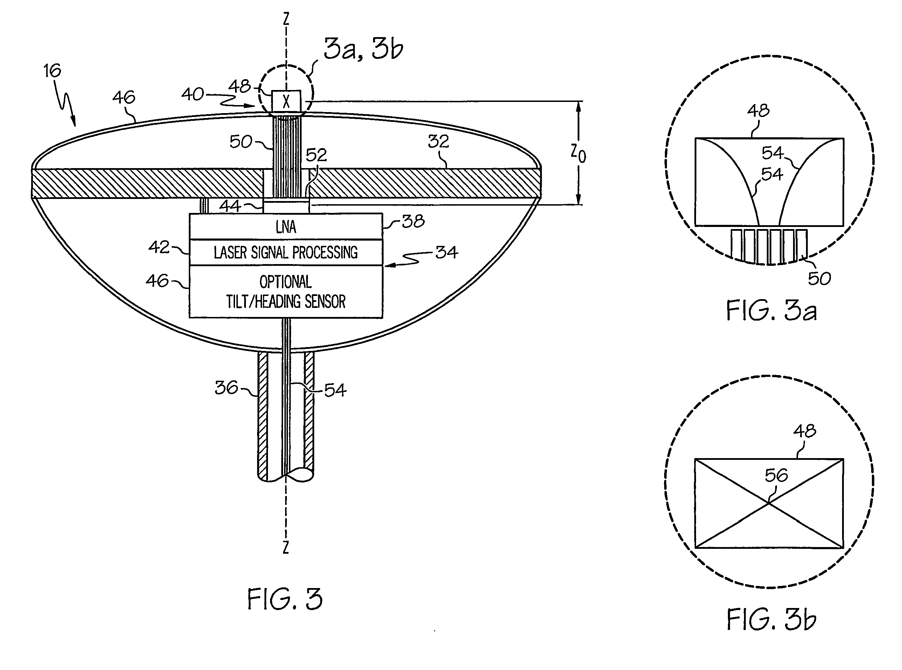

In another embodiment of the CLDGNS antenna **16,** illustrated by FIG. 3, the electronic housing **34** and the antenna element **32** are protected by a radome **46.** A fiber optic pick-up **48** of the laser detector is positioned on the top of the radome **46.** The fiber-optic pick-up **48** is small, about 0.25 inches (6 mm) in diameter, as it only needs to collect enough energy to activate the optical sensor **44.** The non-metallic fiber optic pick-up **48** is orientated along the **Z** axis, aligned vertically with the nominal phase center x of the antenna element **32.** The laser detector also includes optical fiber **50** coupling the fiber optic pick-up **48** to the optical sensor **44.** In this embodiment, the optical sensor **44** is positioned below the antenna element **32.** A filter **52** may be optionally provided to filter out light noise received by the fiber optic pick-up **48.** This improves the sensitivity of the optical sensor **44** to the energy of the fan-shaped beams **23** and **23'** (FIG. 1).

In one embodiment, the fiber optic pick-up **48** comprises a circularly symmetric hyperbolic mirrored surface **54** (FIG. 3a) that catches light from 360 degrees, and reflects it to the optical sensor **44,** via the optical fibers **50.** In another embodiment, the fiber optic pick-up **48** may comprises a TIR prism **56** (FIG. 3b) which redirects the laser energy to the optical sensor **44,** via optical fiber **50.** The use of a total internal reflection (TIR) prism **56** requires no metallic coatings to ensure reflectivity, thereby removing all metal from above the antenna element **32.** Since the metallic and semi-metallic portions of the optical sensor **44** are located below the antenna element **32,** they will not adversely affect the ability of the antenna **16** to pick up the relatively weak satellite signals **21.** Cabling **58** is provided through the support **36** to connect the output of the CLDGNS antenna **16** to the control system **18** (FIG. 1).

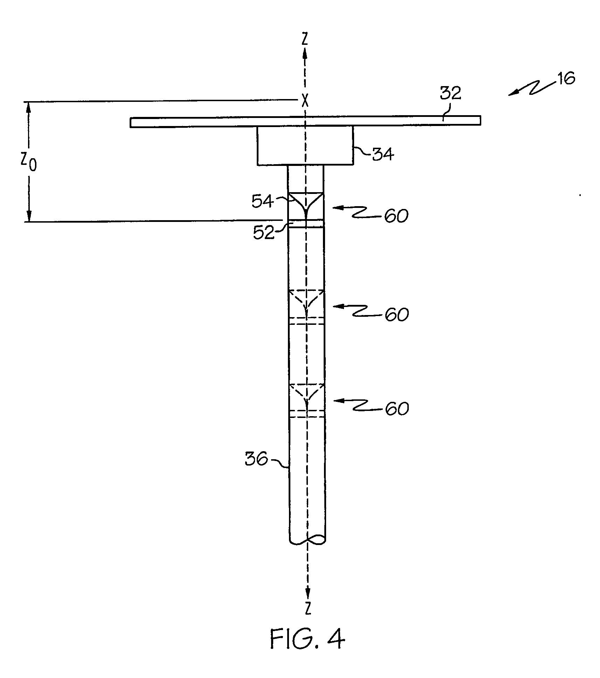

In yet another embodiment, illustrated by FIG. 4, one or more sensors **60** are located below the electronics housing **34,** spaced along the support **36.** This arrangement for the sensors **60** has the advantage of not interfering with reception, and also of not affecting the location of the nominal phase center x of the antenna element **32.** Each sensor **60** may comprise a circularly symmetric hyperbolic mirrored surface or a prism. Because each sensor **60** is below the antenna element **32,** fiber optics may not be required since the sensors may be integrated closely with the detectors. A filter 52 may be provided to filter out extraneous energy to improve sensitivity to laser light. The output signals from the detectors in all the above disclosed embodiments are coupled to associated processors **42.** The output of processor **42** is included in the output of the CLDGNS antenna **16** and provided to the control system **18** for further use and evaluation.

In the embodiment of Fig. 4, the sensors **60** may be provided at known positions along the support **36.** Information provided by the sensors **60** can be used by the control system **18** to determine the distance from the transmitter **12** to the sensors **60.** Since computation is well known to those skilled in the art, no further discussion is provided. This co-axial alignment simplifies implementation though non-co-axial implementations are also possible.

In the above disclosed embodiments of the CLDGNS antenna 16 (FIGS. 1-4), each of the laser detectors and the nominal phase center x of the antenna element are separated by a known, fixed distance and are generally aligned co-axially. In particular, the $Z_0$ distance (and the $X_0$, $Y_0$ distances, if necessary) of each optical sensor **44** relative to the nominal phase center x of the antenna element **32** are factory set. Accordingly, the CLDGNS antenna **16** improves the accuracy of the PTC system **10** by preventing an operator from manually entering a positional error into control system **18** due to a miscalculated measurement between the optical sensors of the laser detector and the nominal phase center x of the antenna element.

In the above embodiments, the CLDGNS antenna 16 is illustrated as having either a geodesic shape or a generally flat disc shape. However, it is to be appreciated that other satellite antennas may also be used advantageously with the concepts of the present invention.

Reference is made to FIG. 5 which illustrates a GNSS and laser system. A base GNSS receiver 70 is located at a known mark and tracks the satellites in view. Range and/or carrier phase measurements are taken by the base receiver 70 and transmitted to the mobile or rover GNSS receiver 72. The mobile GNSS receiver 72 tracks two or more GNSS satellites that are also tracked by the base receiver 70. Alternatively, a network of base GNSS receivers can be used to generate a data stream that is largely corrected for atmospheric and satellite error sources. This approach is termed Network Real-Time Kinematic positioning and has position accuracy advantages over systems that use a single base receiver.

A laser transmitter 74 is located on site and provides suitable coverage for the laser detector 76. The elevation of the laser transmitter 70 relative to the same datum as the GNSS is known. In the case of GPS, the reference spheroid is the World Geodetic System 1984. The laser detector 76 senses the signals sent from the transmitter 74 and determines the difference in elevation relative to the transmitter 74. The laser transmitter aligns itself with the instantaneous direction of gravity and will not in general accord with the direction of a normal to the spheroid at the same point. Fortunately, the reference spheroid sufficiently well approximates the physical earth (mean sea level), particularly given that the operating range of the laser is less than 500 meters. As a result, the height difference obtained from the laser system, will be compatible with changes in height determined from the GNSS.

Let $r_1$, $r_2$, .. $r_s$ be the range observations from the mobile GNSS antenna to satellites 1, 2, .. s. Observations from the base GNSS system are used to correct the mobile observations. The range observations can be considered as either code, or phase. In the case of phase, it is assumed that the carrier phase ambiguities have been removed.

The satellite coordinates are known and are obtained via an ephemeris, typically broadcast by each satellite. The satellite coordinates are given in terms of WGS84 XYZ Cartesian form (i.e., $X_i$, $Y_i$, $Z_i$, where i=1,2..s).

Laser height readings taken at the mobile detector 76 provide the difference in elevation ($\Delta H$) to the Laser Transmitter. This height difference must then be applied to the height of the Laser transmitter above the reference spheroid ($H_T$) to obtain the height of the laser detector 76 above the spheroid ($H_D$). The distance from the center of the spheroid to laser detector 76 is computed by adding $H_T$ to the radius of curvature of spheroid at the mobile unit. Finally, the distance from the center of the spheroid to the GNSS antenna is generated by applying any height offset between laser detector 76 and antenna for the receiver 72 - the final *range* measurement ($r_L$) is compatible with those obtained from GNSS. Hence, the laser height input can be considered as an additional satellite observation, with the satellite located at the center of the earth.

We next apply least squares estimation to estimate the X, Y, and Z coordinates of the mobile unit (plus the receiver clock bias term T). The observation equations needed for the process are common to both GNSS and laser data and can be presented in linearised form as:

$$l_i + v_i = Ax \qquad (1)$$

where:

$l_i$     is a vector of observation minus computed terms for each satellite (i=1,2..s) and the laser-detector (i=L). The approximate coordinates of the rover ($X_0$, $Y_0$, $Z_0$) are used to form the computed (theoretical) range values, $R_i$;

$v_i$     is a vector of observation residuals that recognize that the observations are not perfect, but are affected by *small* errors;

A     is a design matrix that relates the observations with the unknowns; and

x     is a vector of corrections to the approximate rover antenna coordinates and the approximate GNSS receiver clock bias term ($T_0$).

The components of equation (1) are presented in full matrix form below:

$$\begin{bmatrix} r_1 - R_1 \\ r_2 - R_2 \\ .. \\ r_s - R_s \\ r_L - R_L \end{bmatrix} + \begin{bmatrix} v_1 \\ v_2 \\ .. \\ v_s \\ v_L \end{bmatrix} = \begin{bmatrix} a_1 & b_1 & c_1 & 1 \\ a_2 & b_2 & c_2 & 1 \\ .. & .. & .. & .. \\ a_s & b_s & c_s & 1 \\ a_L & b_L & c_L & 0 \end{bmatrix} \begin{bmatrix} \Delta X \\ \Delta Y \\ \Delta Z \\ \Delta T \end{bmatrix} \qquad (2)$$

The design matrix terms $a_i$, $b_i$, $c_i$ are the direction cosines for the range observations from the rover antenna 72 to satellites (for GNSS observations) and from the rover antenna 72 to the center of the spheroid (for laser observations). The direction cosines are computed using:

$$a_i = \frac{-(X_i - X_0)}{R_i}; \quad b_i = \frac{-(Y_i - Y_0)}{R_i}; \quad c_i = \frac{-(Z_i - Z_0)}{R_i}; \qquad (3)$$

Each observation presented in equation (1) has an associated uncertainty. In the case of the GNSS phase observations, this is normally on the order of a centimeter. In the case of laser height readings, it is on the order of a few millimeters. Hence, an observation weight matrix is introduced that is formed by the inverse of the individual observation variances:

$$P = \begin{bmatrix} p_1 & 0 & .. & 0 & 0 \\ 0 & p_2 & .. & 0 & 0 \\ .. & .. & .. & .. & .. \\ 0 & 0 & & p_s & 0 \\ 0 & 0 & & 0 & p_L \end{bmatrix} \qquad (4)$$

Based on the principle of least squares, the most-probable value of the corrections to the unknowns are obtained by minimizing the sum of the squares of the weighted observation residuals according to:

$$x = \left(A^T P A\right)^{-1}\left(A^T P l\right) \qquad (5)$$

Finally, the corrected coordinates and clock bias term (denoted with a superscript ^) of the rover are obtained by applying the result of equation (5) to the respective approximate values used as the linearization point for the adjustment:

$$\begin{bmatrix} \hat{X} \\ \hat{Y} \\ \hat{Z} \\ \hat{T} \end{bmatrix} = \begin{bmatrix} X_0 \\ Y_0 \\ Z_0 \\ T_0 \end{bmatrix} + \begin{bmatrix} \Delta X \\ \Delta Y \\ \Delta Z \\ \Delta T \end{bmatrix} \qquad (6)$$

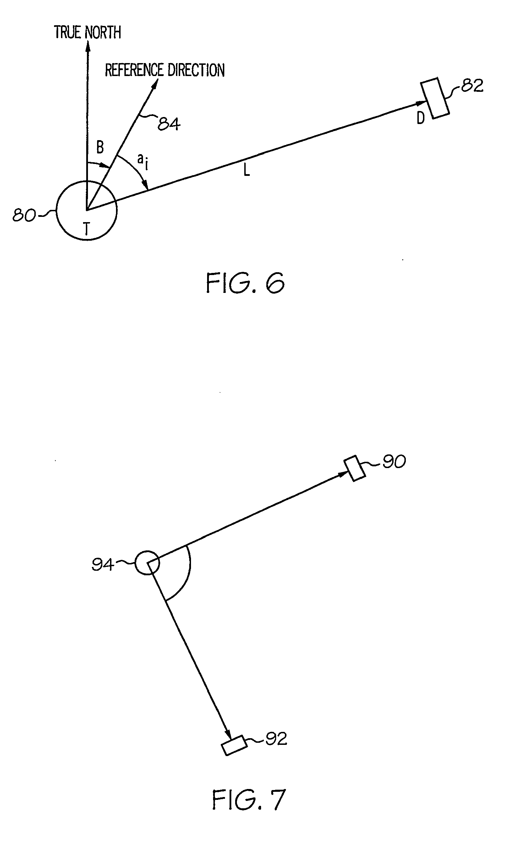

The laser system may include the facility to form measurements of horizontal angles referenced to a fixed direction such as north. Reference is made to FIG. 6. Every time the rotating laser passes a reference mark, a unidirectional bank of LEDs are illuminated at the laser transmitter 80. At the laser detector 82, the time between the next laser strike and the LED illumination provides a measure of the angular displacement of the detector from the reference line, given that the rotation rate of the laser transmitter 80 is measured and therefore is known.

In FIG. 6, the laser transmitter 80 is arbitrarily aligned such that there is an angular displacement of the device with respect to true north of B degrees. Readings of the angle between the transmitter reference line 84 and the detector 82 are available on each sweep of the laser and are denoted by $a_i$. The location of the transmitter 80 is given in terms of three dimensional Cartesian coordinates by $X_T$, $Y_T$, and $Z_T$, while the detector coordinates are X, Y, and Z, as before.

The angular readings may be input as positional observations into the overall estimation scheme used in a combined laser/GNSS system. The least squares approach can be once again applied. For simplicity, consider the unknown coordinates of the detector in terms of a horizontal plane centered on the transmitter 80. Let $E_T$, $N_T$ be the planar coordinates of the transmitter and E, N, the coordinates of the detector. The observation equation that links the angular observations with the detector coordinates is given below:

$$a_i + w_i = \tan^{-1}\left(\frac{E - E_T}{N - N_T}\right) - B \qquad (7)$$

Each angular observation is subject to a small, random error $w_i$. It is possible that the laser transmitter will be manually aligned to north in the field, in which case B will be identically zero. For the purposes of the discussion, below, it is worthwhile considering B as an unknown parameter that can be determined via the integration of GPS and laser devices.

The three unknown parameters in equation (7) are E, N, and B:

$$a_i = f(E, N, B) \tag{8}$$

In order to apply the theory of least squares we must linearize the observation equation:

$$a_i = f(E_0, N_0, B_0) + \frac{df}{dE}\Delta E + \frac{df}{dN}\Delta N + \frac{df}{dB}\Delta B \tag{9}$$

where $E_0$, No, and $B_0$, are initial guesses for the values of E,N and B, respectively; df/dE, df/dN, and df/dB are the partial derivatives of the function with respect to each unknown parameter; and $\Delta E$, $\Delta N$, and $\Delta B$ are corrections to the initial estimates $E_0$, $N_0$, and $B_0$, that lead to the most probable values of the unknowns. Written out in matrix form, equation (9) becomes:

$$[a_i - \alpha_0] + [w_i] = \begin{bmatrix} \dfrac{df}{dE} & \dfrac{df}{dN} & \dfrac{df}{dB} \end{bmatrix} \begin{bmatrix} \Delta E \\ \Delta N \\ \Delta B \end{bmatrix} \tag{10}$$

with $\alpha_o$ the computed angle based on the approximate coordinates of the detector. That is, by inserting $E_0$ for E, No for N, and $B_0$ for B in equation (7), we obtain $\alpha_o$.

If our initial guess for E, N and B is very good, then $\alpha_o$ will be very close to the actual observed angle $\alpha_i$. The partial derivatives of the observation equation with respect to the unknowns are given by:

$$\frac{df}{dE} = \frac{(N - N_T)}{(E - E_T)^2 + (N - N_T)^2} = \frac{(N - N_T)}{L^2} \tag{11}$$

$$\frac{df}{dN} = \frac{-(E - E_T)}{L^2} \tag{12}$$

$$\frac{df}{dB} = -1 \tag{13}$$

A single angle observation from a single transmitter is insufficient for determining the location of the detector. With multiple transmitters, the intersection of two angular observations suffices.

Equation (2) shows the matrix form of GNSS and laser observations being used to estimate the unknown coordinates of the detector antenna. Now we wish to integrate the angular observations into the combined solution for the coordinates of the detector and therefore we need to convert the angular observation development from the E, N plane system to X, Y, and Z Cartesian coordinates. The two coordinate systems are related via the following rotation matrix:

$$\begin{bmatrix} (E-E_T) \\ (N-N_T) \\ (U-U_T) \end{bmatrix} = \begin{bmatrix} -\sin\lambda & -\cos\lambda & 0 \\ -\sin\phi\cos\lambda & -\sin\phi\sin\lambda & \cos\phi \\ \cos\phi\cos\lambda & \cos\phi\sin\lambda & \sin\phi \end{bmatrix} \begin{bmatrix} (X-X_T) \\ (Y-Y_T) \\ (Z-Z_T) \end{bmatrix} \qquad (14)$$

The rotation matrix contains trigonometric values relating to the latitude ($\phi$), and longitude ($\lambda$) of the transmitter. Equation (14) can be used in equation (7) to produce a new angle observation equation that relates to the same coordinate system as that used for GNSS data:

$$a_i + w_i = \tan^{-1}\left(\frac{-\sin\lambda(X-X_T)-\cos\lambda(Y-Y_T)}{-\sin\phi\cos\lambda(X-X_T)-\sin\phi\sin\lambda(Y-Y_T)+\cos\phi\,(Z-Z_T)}\right) - B \qquad (15)$$

In equation (15), the $X_T$, $Y_T$, $Z_T$ and $\phi$, $\lambda$ coordinates of the transmitter are assumed to be known and are a function of: X, Y, Z and B:

$$a_i + w_i = g(X,Y,Z,B) \qquad (16)$$

A linearization process is used to produce an observation equation that can be applied in a least squares estimation scheme:

$$a_i + w_i = g(X_0,Y_0,Z_0,B_0) + \frac{dg}{dX}\Delta X + \frac{dg}{dY}\Delta Y + \frac{dg}{dZ}\Delta Z + \frac{dg}{dB}\Delta B \qquad (17)$$

The partial derivatives in equation (17) involving trig functions are straightforward to compute, and are therefore omitted here.

We now have all of the components needed to state the matrix form of the observation equations for combined GNSS, laser height and laser direction data:

$$\begin{bmatrix} r_1 - R_1 \\ r_2 - R_2 \\ r_s - R_s \\ r_L - R_L \\ a - \alpha \end{bmatrix} + \begin{bmatrix} v_1 \\ v_2 \\ v_s \\ v_L \\ w \end{bmatrix} = \begin{bmatrix} a_1 & b_1 & c_1 & 1 & 0 \\ a_2 & b_2 & c_2 & 1 & 0 \\ a_s & b_s & c_s & 1 & 0 \\ a_L & b_L & c_L & 1 & 0 \\ h & j & k & 0 & -1 \end{bmatrix} \begin{bmatrix} \Delta X \\ \Delta Y \\ \Delta Z \\ \Delta T \\ \Delta B \end{bmatrix} \qquad (18)$$

where the horizontal direction partial derivatives with respect to X, Y and Z are given by h, j and k, respectively.

An observation weight must be assigned to the angle measurement shown in equation (18). Then, the best estimates of the corrections to the coordinates, GNSS receiver clock, and laser transmitter orientation are obtained using the matrix expression (5). Finally, the best estimates of the parameters are computed by applying the corrections to their approximate values:

$$\begin{bmatrix} \hat{X} \\ \hat{Y} \\ \hat{Z} \\ \hat{T} \\ \hat{B} \end{bmatrix} = \begin{bmatrix} X_0 \\ Y_0 \\ Z_0 \\ T_0 \\ B_0 \end{bmatrix} + \begin{bmatrix} \Delta X \\ \Delta Y \\ \Delta Z \\ \Delta T \\ \Delta B \end{bmatrix} \qquad (19)$$

The aforementioned process is based around the assumption that the laser transmitter height and location are known. One benefit of a combined laser and GNSS system, is that it can be self-calibrating. Instead of solving for just the position of the detector antenna (plus clock and orientation nuisance parameters), it is possible to include the three dimensional position of the laser transmitter as an unknown, as well. As shown in FIG. 7, laser and GNSS position readings must be taken at more than two non-collinear points 90, 92 (i.e., two points that are not aligned) around the transmitter 94 to be able to compute the transmitter location. Preferably, many readings can be taken at a range of points surrounding the transmitter to be able to average out GNSS random errors and small systemic error sources. Where possible, the detector should be placed at points that establish roughly a 90 degree angle at the transmitter. This gives a good fix on the transmitter location.

GPS observations are normally made at regular time intervals or epochs. Laser readings are dictated by the rotation rate of the transmitter and therefore may not exactly coincide with the GPS observations. There are several ways of handling this situation, assuming that the movement of the receiver is rapid enough that an error may result from a lack of synchronization. First, the rotation rate of the laser transmitter may be increased so that a reading can be taken which is sufficiently close to a GPS epoch that negligible error in position results. Second, the motion of the rover can be modeled in a Kalman filter and the GPS and laser detector observations can be fed into the filter whenever they occur. Third, the rate of change of the GPS or laser observations can be modeled so that the observations can be skewed to a common epoch. In any case, the GPS and Laser observations can be readily processed together in a consistent manner.

Although the present invention has been described in terms of the presently preferred embodiments, it is to be understood that the disclosure is not to be interpreted as limiting. For example, the optical sensor and the GPS antenna are described as being mounted on the machine in one embodiment, and this is intended to include mounting these components on the body of the machine, or on the machine implement for movement therewith. Various alterations and modifications will no doubt become apparent to those skilled in the art after having read the above disclosure.

## Claims

1. A system for determining position, having a laser transmitter (12) that projects at least one laser beam (23) that rotates about a generally vertical axis ($Z_0$), a GPS receiver for determining position, the GPS receiver having a GPS antenna (32), an optical sensor (44) for receiving the laser beam, and a device (18) receiving signals from the GPS receiver and signals from the optical sensor to determine the position of the sensor and the receiver, said system **characterised in that**:

   said optical sensor (44) is coaxial with, and at, or displaced a small distance from, the phase center of said GPS antenna (32), and said device (18) utilizing signals received from the optical sensor to improve the estimate of position based on said signals from said GPS receiver.

2. The system of claim 1 further **characterised in that** said laser transmitter projects a pair of fan shaped beams (23, 23') of laser light, and said optical sensor is responsive to both of said beams.

3. The system of claim 1 further **characterised in that** said GPS antenna and said optical sensor (44) are located on the same mast (36) in close proximity.

4. The system of claim 1 further **characterised in that** a least squares approximation is utilized to determine the most likely position, based on the detection signals from the optical sensor (44) and the GPS receiver.

5. The system of claim 2 further **characterised in that** said system determines the position of a machine (14) and controls the position of the machine, said GPS antenna (32) and said optical sensor (44) being mounted on the machine (14), and said device (18) being mounted on the machine and receiving a signal from the GPS receiver and a signal from the optical sensor (44), to determine the position of the machine (14) from a combination of all of the signals and for providing a control signal.

6. The system of claim 5 further **characterised in that** said GPS antenna and said optical sensor are mounted on said machine (14) in close, fixed proximity to each other, and said GPS antenna (32) and said optical sensor (44) are mounted for movement with an implement of said machine (14).

7. The system of claim 6 further **characterised in that** said device on the machine effects control of the position of said implement based on a sensed position and a desired position.

8. The system of claim 1 further **characterised in that** said GPS receiver provides first data for position estimation in response to reception of signals from a plurality of satellites (22), said optical sensor (44) provides second data for position estimation, and said device (18) comprises a microprocessor, responsive to said first data and said second data to determine an estimate of the position of said receiver and said antenna by combining said second data and said first data before determination of said estimate position.

**Patentansprüche**

1. System zur Positionsermittlung mit einem Lasersender (12), der wenigstens einen um eine allgemein vertikale Achse ($Z_o$) rotierenden Laserstrahl (23) projiziert, einem GPS-Empfänger zur Positionsermittlung, wobei der GPS-Empfänger eine GPS-Antenne (32) hat, einem optischen Sensor (44) zum Empfangen des Laserstrahls und einer Vorrichtung (18) zum Empfangen von Signalen von dem GPS-Empfänger und Signalen von dem optischen Sensor, um die Position des Sensors und des Empfängers zu ermitteln, wobei das genannte System **dadurch gekennzeichnet ist, dass**:

der genannte optische Sensor (44) koaxial mit und an, oder eine geringe Distanz verschoben von, der Phasenmitte der genannten GPS-Antenne (32) ist und die genannte Vorrichtung (18) vom optischen Sensor empfangene Signale benutzt, um die Positionsschätzung auf der Basis der genannten Signale von dem genannten GPS-Empfänger zu verbessern.

2. System nach Anspruch 1, ferner **dadurch gekennzeichnet, dass** der genannte Lasersender ein Paar fächerförmige Laserlichtstrahlen (23, 23') projiziert und der genannte optische Sensor auf beide der genannten Strahlen anspricht.

3. System nach Anspruch 1, ferner **dadurch gekennzeichnet, dass** sich die genannte GPS-Antenne und der genannte optische Sensor (44) am selben Mast (36) in unmittelbarer Nähe zueinander befinden.

4. System nach Anspruch 1, ferner **dadurch gekennzeichnet, dass** zum Ermitteln der wahrscheinlichsten Position eine Kleinste-Quadrate-Approximation auf der Basis der Detektionssignale vom optischen Sensor (44) und vom GPS-Empfänger angewandt wird.

5. System nach Anspruch 2, ferner **dadurch gekennzeichnet, dass** das genannte System die Position einer Maschine (14) ermittelt und die Position der Maschine steuert, wobei die genannte GPS-Antenne (32) und der genannte optische Sensor (44) an der Maschine (14) montiert sind und die genannte Vorrichtung (18) an der Maschine montiert ist und ein Signal vom GPS-Empfänger und ein Signal vom optischen Sensor (44) empfängt, um die Position der Maschine (14) anhand einer Kombination aller Signale zu ermitteln und um ein Steuersignal bereitzustellen.

6. System nach Anspruch 5, ferner **dadurch gekennzeichnet, dass** die genannte GPS-Antenne und der genannte optische Sensor an der genannten Maschine (14) in unmittelbarer, unveränderlicher Nähe zueinander montiert sind und die genannte GPS-Antenne (32) und der genannte optische Sensor (44) für eine Bewegung mit einem Gerät der genannten Maschine (14) montiert sind.

7. System nach Anspruch 6, ferner **dadurch gekennzeichnet, dass** die genannte Vorrichtung an der Maschine eine Steuerung der Position des genannte Geräts auf der Basis einer erfassten Position und einer gewünschten Position bewirkt.

8. System nach Anspruch 1, ferner **dadurch gekennzeichnet, dass** der genannte GPS-Empfänger erste Daten zur Positionsschätzung als Reaktion auf den Empfang von Signalen von mehreren Satelliten (22) bereitstellt, der genannte optische Sensor (44) zweite Daten zur Positionsschätzung bereitstellt und die genannte Vorrichtung (18) einen Mikroprozessor umfasst, der auf die genannten ersten Daten und die genannten zweiten Daten anspricht, um eine Schätzung der Position des genannten Empfängers und der genannten Antenne durch Kombinieren der genannten zweiten Daten und der genannten ersten Daten vor dem Ermitteln der genannten Schätzposition zu ermitteln.

**Revendications**

1. Système de détermination d'une position, doté d'un émetteur laser (12) lequel projette au moins un faisceau laser (23) qui tourne autour d'un axe sensiblement vertical ($Z_0$), d'un récepteur GPS pour déterminer la position, le récepteur GPS possédant une antenne GPS (32), d'un capteur optique (44) pour recevoir le faisceau laser, et d'un dispositif (18) lequel reçoit des signaux en provenance du récepteur GPS et des signaux en provenance du capteur optique afin de déterminer la position du capteur et du récepteur, ledit système étant **caractérisé en ce que** :

   ledit capteur optique (44) est coaxial avec le centre de phase de ladite antenne GP (32), et se trouve au niveau de ce centre ou bien est éloigné d'une faible distance de celui-ci, et ledit dispositif (18) utilisant les signaux reçus en provenance du capteur optique pour améliorer l'estimatif de la position sur la base desdits signaux en provenance dudit récepteur GPS.

2. Système selon la revendication 1, **caractérisé en outre en ce que** ledit émetteur laser projette une paire de faisceaux en forme d'éventail (23, 23') de lumière laser, et ledit capteur optique est sensible auxdits deux faisceaux.

3. Système selon la revendication 1, **caractérisé en outre en ce que** ladite antenne GPS et ledit capteur optique (44) sont positionnés sur le même mât (36) en proximité immédiate.

4. Système selon la revendication 1, **caractérisé en outre en ce qu'**une méthode d'approximation des moindres carrés est utilisée pour déterminer la position la plus probable, sur la base des signaux de détection en provenance du capteur optique (44) et du récepteur GPS.

5. Système selon la revendication 2, **caractérisé en outre en ce que** ledit système détermine la position d'une machine (14) et pilote la position de la machine, ladite antenne GPS (32) et ledit capteur optique (44) étant montés sur la machine (14), et ledit dispositif (18) étant monté sur la machine et recevant un signal en provenance du récepteur GPS et un signal en provenance du capteur optique (44), afin de déterminer la position de la machine (14) à partir d'une combinaison de tous les signaux et pour procurer un signal de pilotage.

6. Système selon la revendication 5, **caractérisé en outre en ce que** ladite antenne GPS et ledit capteur optique sont montés sur ladite machine (14) en proximité immédiate et fixe l'un par rapport à l'autre, et ladite antenne GPS (32) et ledit capteur optique (44) sont montés en vue d'un mouvement avec un accessoire de ladite machine (14).

7. Système selon la revendication 6, **caractérisé en outre en ce que** ledit dispositif sur la machine effectue le pilotage de la position dudit accessoire sur la base d'une position captée et d'une position désirée.

8. Système selon la revendication 1, **caractérisé en outre en ce que** ledit récepteur GPS procure des premières données pour l'estimation de la position en réaction à la réception de signaux en provenance d'une pluralité de satellites (22), ledit capteur optique (44) procure des deuxièmes données pour l'estimation de la position, et ledit dispositif (18) comporte un microprocesseur, lequel est sensible auxdites premières données et auxdites deuxièmes données, afin de déterminer un estimatif de la position dudit récepteur et de ladite antenne grâce à la combinaison desdites deuxièmes données et desdites premières données avant de déterminer ladite position estimée.

FIG.1

FIG. 2

FIG. 2a

EP 1 774 257 B1

FIG. 3

FIG. 3a

FIG. 3b

EP 1 774 257 B1

FIG. 4

EP 1 774 257 B1

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003137658 A1
- US 6433866 B